# EUROPEAN PATENT APPLICATION

(11) **EP 2 060 969 A2**
(43) Date of publication of application: **20.05.2009**
(21) Application number: 08167920.1
(22) Date of filing: 30.10.2008
(51) Int. Cl.: G06F 3/045, G06F 3/033

(54) **Touch device and method of determining touch mode thereof**

(30) Priority: 08.11.2007 CN 200710166953
(71) Applicant: ASUSTeK Computer Inc., Peitou, Taipei City (TW)
(72) Inventor: Liu, Kuan-Lin, 112, Taipei City (TW); Hsieh, Ming-Chih, 112, Taipei City (TW); Lin, Chu-Hui, 112, Taipei City (TW)
(74) Representative: Viering, Jentschura & Partner

(57) **Abstract**

A touch device and a method of determining touch mode thereof are disclosed. The touch device comprises a control module, a resistive touch panel, and a measuring unit. The resistive touch panel comprises a first conductive layer and a second conductive layer, wherein the first conductive layer couples with a resistor. The method comprises the steps of: when the first conductive layer contacts the second conductive layer, measuring a voltage across the resistor to obtain a measured voltage; activating a touch pen operation mode if the measured voltage is smaller than a default value; and activating a finger operation mode if the measured voltage is larger than the default value.

## Description

### BACKGROUND OF THE INVENTION

### 1. Field of the Invention

The present invention relates to a touch display device, and more particularly, relates to a touch display device capable of identifying a touch pen operation mode and a finger operation mode.

### 2. Description of the Related Art

As technologies advance, there are many electronic devices such as the personal data assistant, the cellular phone, or the tablet PC which comprise touch devices. Touch devices provide intuitive operations for users to input data and select functions; therefore, touch devices have been widely applied in many kinds of electronic devices, especially touch display devices. A touch display device comprising a resistance touch panel is cost efficient and easy to use; therefore, resistance touch panels are widely used.

However, in the prior art, the touch display device having resistive touch panels does not provide control modules for determining a touch pen operation mode or a finger operation mode; therefore, the touch screen devices has the same control effect between the touch pen operation mode and the finger operation mode. If the touch display device can identify different operation modes, the control methods and effects of the touch display device will be more varied.

Therefore, it is necessary to provide a new touch display device to solve problems of the prior art..

### SUMMARY OF THE INVENTION

It is an object of the present invention to provide a touch device capable of being operated in a touch pen operation mode or a finger operation mode.

It is another object of the present invention to provide a method of determining the touch mode of a touch device.

To achieve the object mentioned above, the present invention provides a touch device comprising a resistive touch panel, a measuring unit, a resistor, and a control module. The resistive touch panel comprises a first conductive layer and a second conductive layer. The first conductive layer is capable of contacting the second conductive layer when an input object is pressed. The resistor electrically couples between the control module and the first conductive layer. The measuring unit is used for measuring a voltage value across the resistor. The control module is electrically coupled with the resistor and the measuring unit. When the first conductive layer contacts the second conductive layer, the measuring unit outputs a measured voltage value. The touch pen operation mode is activated when the measured voltage value is smaller than a default value; the finger operation mode is activated when the measured voltage value is larger than the default value.

The present invention provides a method of determining a touch mode for a resistive touch panel capable of being operated in a touch pen operation mode or a finger operation mode, the method comprising: when the first conductive layer contacts the second conductive layer, measuring a voltage across the resistor to obtain a measured voltage; determining whether the measured voltage is smaller than a default value; activating the touch pen operation mode if the measured voltage is smaller than the default value; activating the finger operation mode if the measured voltage is larger than the default value.

### BRIEF DESCRIPTION OF THE DRAWINGS

FIG. 1A-1B are structure drawings of a touch device according to the embodiment of the present invention;
FIG. 2 is a flow chart of a method of determining touch mode according to the present invention;
FIG. 3A-3B are equivalent circuit diagrams of the touch display device in a touch pen operation mode;
FIG. 4A-4B are equivalent circuit diagrams of the touch display device in a finger operation mode;
FIG. 5A-5B are equivalent circuit diagrams of a five-wire resistive touch panel of the present invention; and
FIG. 6 is an illustration of an electronic device comprising the touch display device of the present invention.

### DETAILED DESCRIPTION OF THE PREFERRED EMBODIMENT

The advantages and innovative features of the invention will become more apparent from the following detailed description when taken in conjunction with the accompanying drawings.

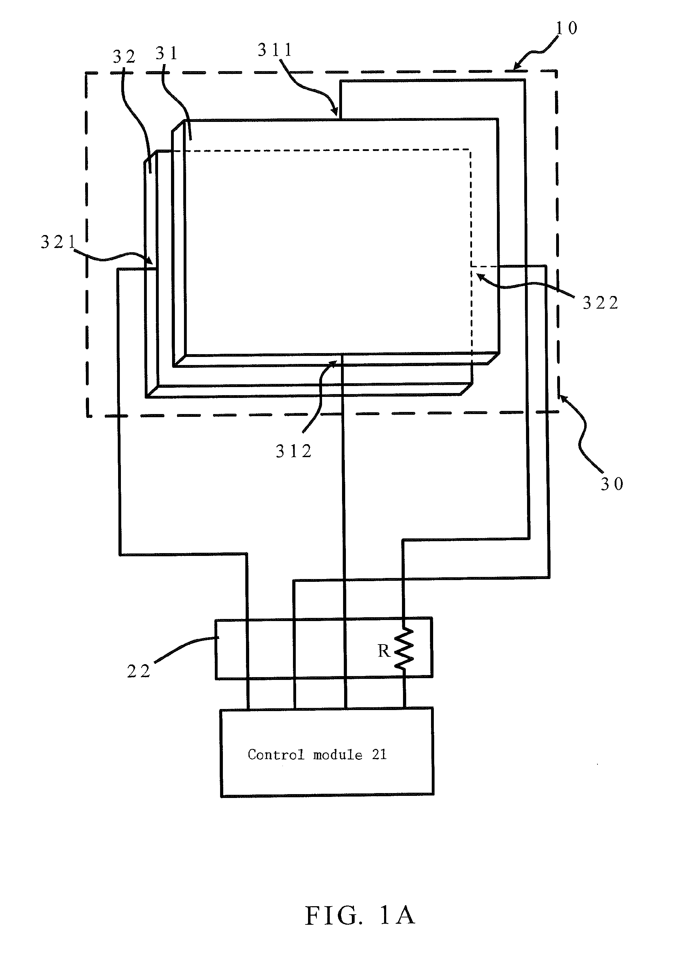

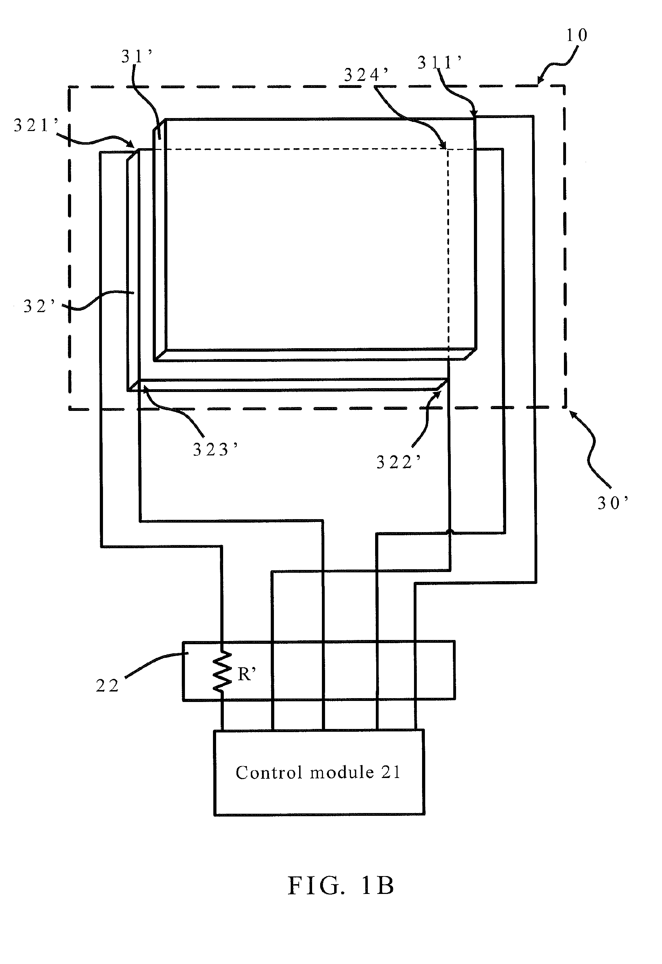

The touch device in the present invention can be a touch display device, please refer to FIG. 1A and FIG. 1B. FIG. 1A and FIG. 1B are structure drawings of a touch device according to the embodiment of the present invention.

The touch display device 10 of the present invention can be operated under a touch pen operation mode or a finger operation mode. As shown in FIG. 1A, the touch display device 10 includes a control module 21, a measuring unit 22, a resistive touch panel 30, and a resistor R. The control module 21 can be a chip; the control module 21 is electrically coupled with the measuring unit 22. The control module 21 uses the measuring unit 22 to measure the voltage value across the resistor R. In one embodiment of the present invention, the measuring unit 22 can also be implemented in the control module 21.

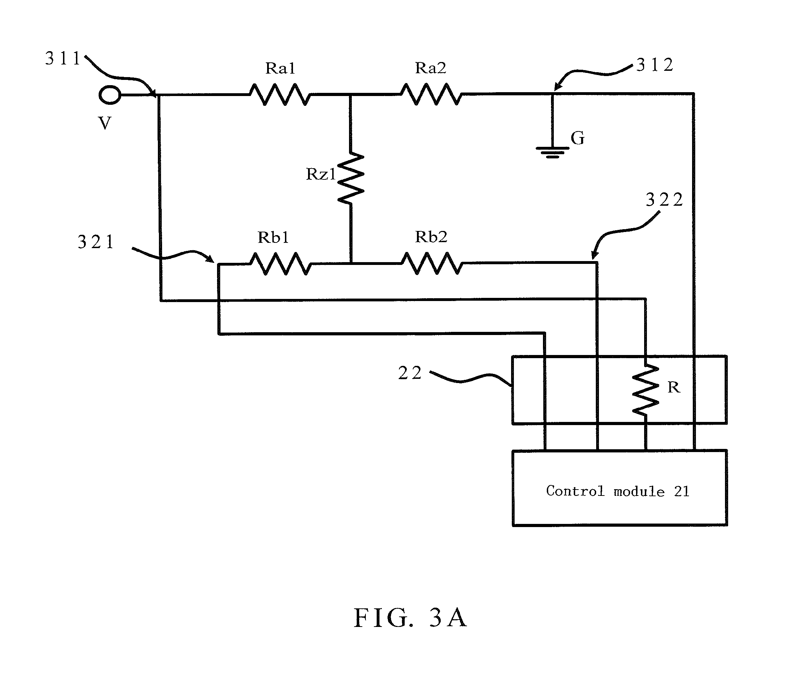

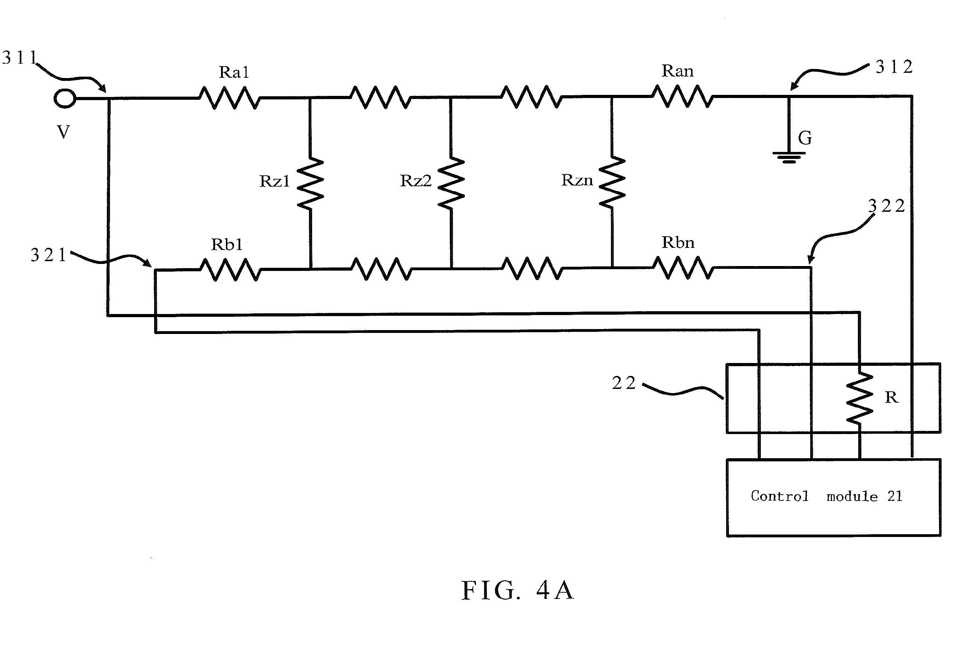

As shown in FIG. 1A, in one embodiment of the present invention, the resistive touch panel 30 is, but is not limited, to a four-wire resistive touch panel. The resistive touch panel 30 comprises a first conductive layer 31 and a second conductive layer 32. The first conductive layer 31 comprises a first electrode 311 and a second electrode 312. The first electrode 311 and the second electrode 312 respectively connect to a power source V or a ground G (as shown in FIG. 3A and FIG. 4A) to create a voltage difference between the first electrode 311 and the second electrode 312 to form a uniform electric field. The first electrode 311 and the second electrode 312 electrically couple with the control module 21 respectively, with the resistor R being electrically coupled between the first electrode 311 and the control module 21. The second conductive layer 32 comprises a third electrode 321 and a fourth electrode 322. The third electrode 321 and the fourth electrode 322 electrically couple with the control module 21 respectively.

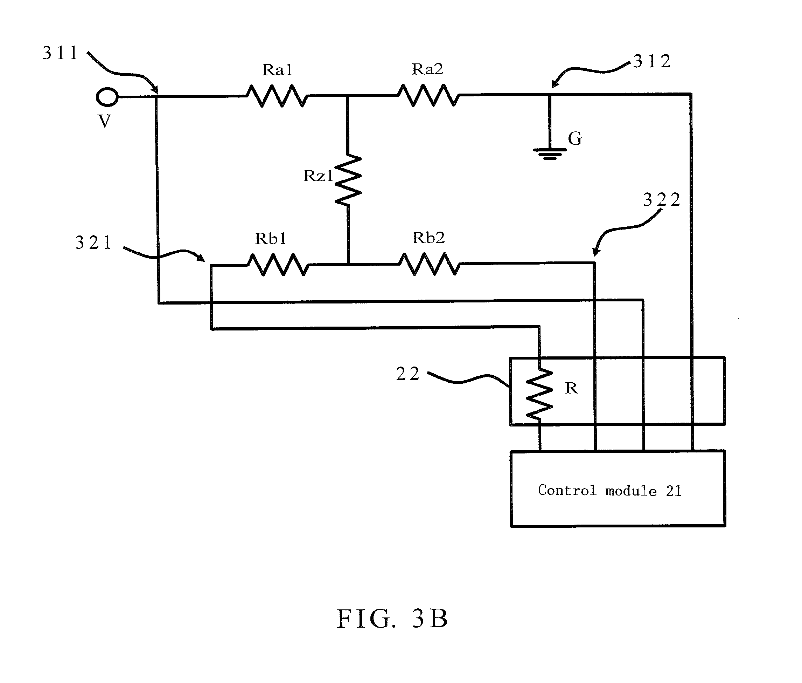

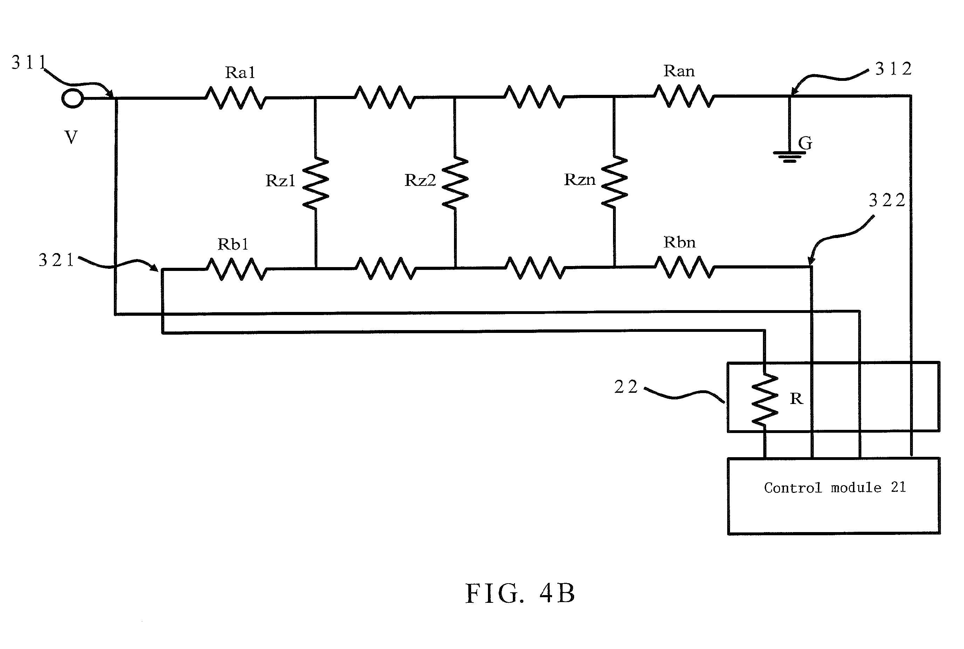

Furthermore, besides being electrically coupled with the first electrode 311 on the first conductive layer 31, the resistor R can be electrically coupled with the second electrode 312 or electrically coupled with the third electrode 321 or the fourth electrode 322 on the second conductive layer 32 (as shown in FIG. 3B and FIG. 4B).

In one embodiment of the present invention, the first electrode 311, the second electrode 312, the third electrode 321, and the fourth electrode 322 are all conductive wires to form the four-wire resistive touch panel 30. The third electrode 321 and the fourth electrode 322 are disposed at opposite side of the second conductive layer 32 respectively to measure an X-axis coordinate value on the resistive touch panel 30. In order to measure a Y-axis coordinate value, the third electrode 321 and the fourth electrode 322, which are disposed on opposite sides of the second conductive layer 32, can also have a voltage difference and form a uniform electric field. Therefore, the first electrode 311 and the second electrode 312, on opposite side of the first conductive layer 31, are used to measure the Y coordinate value. The configuration of the X-axis and the Y-axis of the four-wire resistive touch panel and their working theory are well known by those in the related field, so no further description will be provided.

An input object (not shown in figure) such as a finger or a touch pen can press the first conductive layer 31 to contact the second conductive layer 32. A short circuit is formed when the first conductive layer 31 contacts the second conductive layer 32, causing a drop in voltage. Therefore, whether the first conductive layer 31 contacts the second conductive layer 32 is determined by measuring the voltage values of the third electrode 321 or the fourth electrode 322. When the input object presses the first conductive layer 31 to contact the second conductive layer 32, the measuring unit 22 measures the voltage value of the resistor R to obtain a measured voltage value. When the measured voltage value is larger than a default value, which means a finger is pressing the first conductive layer 31 to contact the second conductive layer 32, the finger operation mode is thus activated. If the measured voltage is smaller than the default value, which indicates that a touch pen is pressing the first conductive layer 31 to contact the second conductive layer 32, the touch pen operation mode is activated. Wherein the default value can be set by the control module 21, it can also be set by other means as long as it falls within the scope of the present invention. The method of determining whether the touch pen operation mode or the finger operation mode is activated will be described in detail below.

It is noted that the number of resistors R is not limited to one, and that any two of the electrodes can be used to couple with different resistors in the present invention.

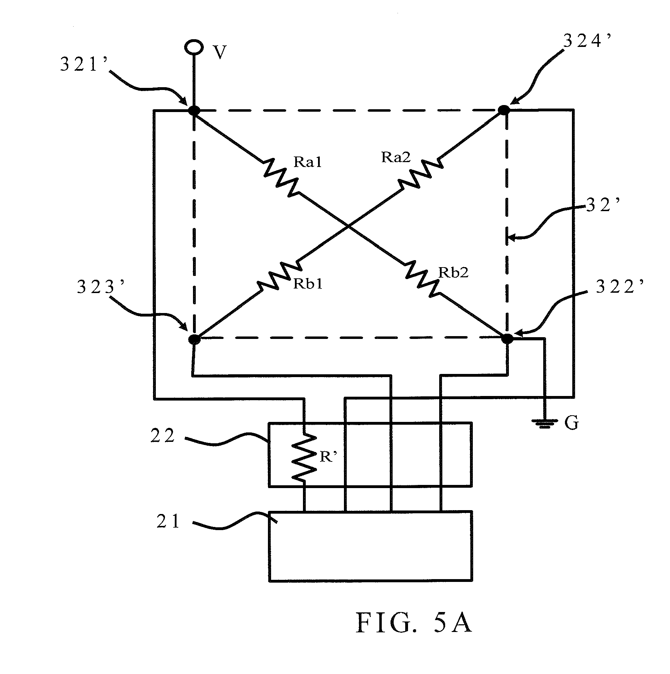

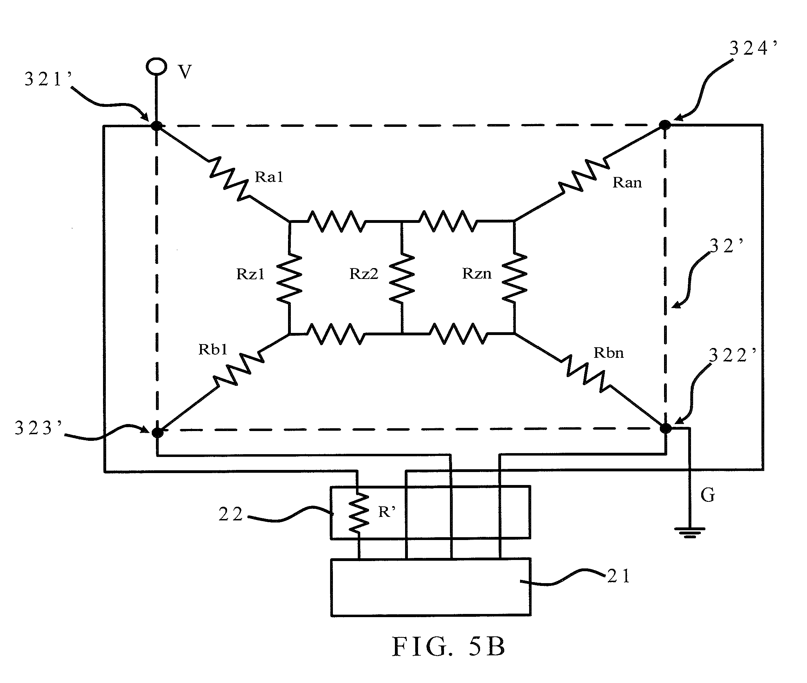

As shown in FIG. 1B, in one embodiment of the present invention, the resistive touch panel also can be a five-wire resistive touch panel 30'. The resistive touch panel 30' comprises a second conductive layer 31' and a first conductive layer 32'. The second conductive layer 31' comprises a sensing electrode 311', and the first conductive layer 32' comprises a first electrode 321', a second electrode 322', a third electrode 323', and a fourth electrode 324'. The first electrode 321' and the second electrode 322' couple with the power source V or the ground G respectively (as shown in FIG. 5A and FIG. 5B) in order to cause a voltage difference between the first electrode 321' and the second electrode 322' and form a uniform electric field. The first electrode 321' and the second electrode 322' electrically couple with the control module 21 respectively, and a resistor R' is coupled between the first electrode 321' and the control module 21.

It is noted that the resistor R' is not coupled with only the first electrode 321' on the first conductive layer 32'; the resistor R' can also be electrically coupled with the second electrode 322', the third electrode 323', or the fourth electrode 324' in the present invention.

In one embodiment of the present invention, the sensing electrode 311', the first electrode 321', the second electrode 322', the third electrode 323', and the fourth electrode 324' are conductive wires to form the five-wire resistive touch panel 30'. The first electrode 321', the second electrode 322', the third electrode 323', and the fourth electrode 324' can be utilized for measuring the X-axis coordinate value and the Y-axis coordinate value of the resistive touch panel 30'. The configuration of the X axis and the Y axis and the working theory of the five-wire resistive touch panel are well known by those in the related field; therefore, they will not be described further.

An input object (not shown in figure) such as a finger or a touch pen can press the second conductive layer 31' and the first conductive layer 32' such that they contact each other. When the second conductive layer 31' contacts the first conductive layer 32', a short circuit is formed, thus generating a drop in voltage. Therefore, whether the second conductive layer 31' contacts the first conductive layer 32' is determined by measuring the voltage value of the sensing electrode 311'. When the second conductive layer 31' contacts the first conductive layer 32', the measuring unit 22 measures the voltage value of the resistor R' to obtain a measured voltage value. When the measured voltage value is larger than a default value, it indicates that a finger is pressing the second conductive layer 31' and causing it to contact the first conductive layer 32'; accordingly, the finger operation mode is activated. If the measured voltage is smaller than the default value, it indicates that the touch pen is pressing the second conductive layer 31' and causing it to contact the first conductive layer 32'; accordingly, the touch pen operation mode is activated. Wherein the default value can be set by the control module 21, it can also be set by other means as long as it falls within the scope of the present invention. The method of determining whether the touch pen operation mode or the finger operation mode is activated will be described in detail below.

It is noted that the number of resistors R' connected to the resistive touch panel 30' is not limited to one. Two of the electrodes can be selected to be connected to different resistors in the present invention.

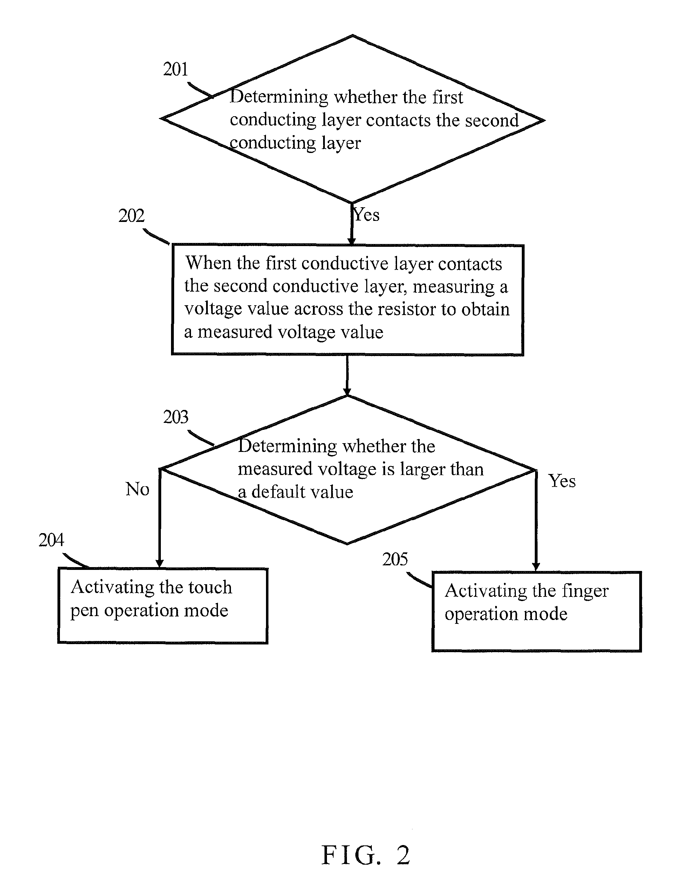

Now please refer to FIG. 2 to FIG. 4B for flow charts of the method of determining touch mode and equivalent circuit diagrams for the touch display device. FIG. 3A is an equivalent circuit diagram of the touch display device according to a first embodiment of the touch pen operation mode; FIG. 3B is a n equivalent circuit diagram of the touch display device according to a second embodiment of the touch pen operation mode; FIG. 4A is a n eq uivalent circuit diagram of the touch display device according to the first embodiment of the finger operation mode; FIG. 4B is an equivalent circuit diagram of the touch display device according to the second embodiment of the finger operation mode. It is noted that although the four-wire resistive touch panel 30 is used for illustrating the method of determining touch mode, the method can use devices other than the four-wire resistive touch panel 30 to determine touch mode.

First, the method goes to step 201: determining whether the first conductive layer contacts the second conductive layer.

As to the method of determining whether the first conductive layer contacts the second conductive layer, first the control module 21 controls two electrodes of the resistive touch panel 30 to be electrically coupled with the power source and the ground, and then the voltage of another electrode is measured to determine whether a voltage drop has been generated. For example, in FIG. 3A, when the first conductive layer 31 contacts the second conductive layer 32, the first conductive layer 31 and the second conductive layer 32 will form a plurality of equivalent resistors Ra1, Ra2, Rb1, and Rb2, respectively. The connect area between the first conductive layer 31 and the second conductive layer 32 also forms an equivalent resistor Rz1. At this time, the control module 21 controls the first electrode 311 of the first conductive layer 31 to be electrically coupled with the power source V and the second electrode 312 to be electrically coupled with the ground G, and then determines whether there is a voltage drop at the third electrode 321 of the second conductive layer 32. If the first conductive layer 31 does not contact the second conductive layer 32, the equivalent circuit between the two conductive layers is broken; therefore, no voltage drop is present at the third electrode 321. The control module 21 can determine whether the first conductive layer 31 contacts the second conductive layer 32 by the above method.

The above method is just one example of the present invention. The third electrode 321 also can be electrically coupled with the power source V, and the fourth electrode 322 also can be electrically coupled with the ground G. Therefore, the present invention is not limited to the circuit connections illustrated in the figures.

Then the method goes to step 202: when the first conductive layer contacts the second conductive layer, measuring a voltage value across the resistor to obtain a measured voltage value.

As shown in FIG. 3A or FIG. 4A, the control module 21 uses the measuring unit 22 to measure a voltage value across the resistor R to obtain the measured voltage value.

Then it goes to step 203: determining whether the measured voltage is larger than a default value.

The control module 21 determines whether the measured voltage is larger than a default value, wherein the default value can be set by the control module 21; however, the default value can also be set by other means.

When the touch pen touches the resistive touch panel 30, the contact area between the first conductive layer 31 and the second conductive layer 32 is very small; the equivalent circuit is shown in FIG. 3A. There could be only one equivalent resistor Rz1 between the first conductive layer 31 and the second conductive layer 32. Take the first conductive layer 31 as an example: The resistance of the equivalent resistor from the first electrode 311 to the second electrode 312 is equal to the equivalent resistor Ra1 plus the equivalent resistor Ra2.

When the user uses a finger to touch the resistive touch panel 30, the contact area between the first conductive layer 31 and the second conductive layer 32 is larger than that area in the case when the touch pen is used; the equivalent circuit is shown in FIG. 4A. There could be a plurality of equivalent resistors Ra1 to Ran formed on the first conductive layer 31, and a plurality of equivalent resistors Rb1 to Rbn formed on the second conductive layer 32, and a plurality of resistors Rz1 to Rzn formed between the first conductive layer 31 and the second conductive layer 32. Therefore, the resistance of the equivalent resistor from the first electrode 311 to the second electrode 312 is equal to that of treating the plurality of equivalent resistors Ra1 to Ran and the plurality of equivalent resistors Rb1 to Rbn and the plurality of equivalent resistors Rz1 to Rzn in parallel connection. When the user uses a finger to touch the resistive touch panel 30, the resistance of the equivalent resistor from the first electrode 311 to the second electrode 312 is smaller than the equivalent resistor when the user uses a touch pen to touch the resistive touch panel 30.

When the first conductive layer 31 is cascaded with the resistor R through the first electrode 311, it is the same current that flows through the first conductive layer 31 and the resistor R. When the resistance of the equivalent resistor between the first electrode 311 and the second electrode 312 decreases, for the total voltage value remaining unchanged, the total current value will increase; then the measured voltage value across the resistor R will increase. Therefore, the default value can be set to be a value between the measured voltage value obtained when a finger is touching the resistive touch panel 30 and the measured voltage value obtained when a touch pen is touching the resistive touch panel 30. The measuring unit 22 is used for measuring the measured voltage value across the resistor R and comparing it with the default value; thus it is viable to determine whether the resistive touch panel 30 is touched by a finger or a touch pen.

Furthermore, the resistor R can be electrically coupled with the second electrode 312 on the first conductive layer 31; alternatively, as shown in the second embodiment in FIG. 3B and FIG. 4B, the resistor R can be electrically coupled with the third electrode 321 or the fourth electrode 322 on the second conductive layer 32. The measuring unit 22 obtains the measured voltage value across the resistor R to determine whether the resistive touch panel 30 is touched by a finger or a touch pen. The method of determining the touch mode by using the resistor R electrically coupled with the third electrode 321 or the fourth electrode 322 on the second conductive layer 32 is similar to that of using the resistor R electrically coupled with the first electrode 311 or the second electrode 312 on the first conductive layer 32; therefore it will not be described further. From the above, when the measured voltage value is smaller than the default value, the equivalent resistor between the first electrode 311 and the second electrode 312 is larger, and then step 204 is performed: activating the touch pen operation mode.

Hence, the control module 21 directly activates the touch pen operation mode.

When the measured voltage value is larger than the default value, the equivalent resistor between the first electrode 311 and the second electrode 312 is smaller, and then step 205 is performed: activating the finger operation mode.

Hence, the control module 21 directly activates the finger operation mode.

It is noted that the order of the steps in determining the touch mode is not limited to the above description; any other order can be used as long as it can achieve the object of the present invention.

Furthermore, the method of determining the touch mode can be applied in the five-wire resistive touch panel 30' in FIG. 1B. Pleas e refer to the equivalent circuits shown in FIG. 5A and FIG. 5B. FIG. 5A is an equivalent circuit diagram of the five-wire resistive touch panel 30' in the touch pen operation mode according to the present invention; FIG. 5B is an equivalent circuit diagram of the five-wire resistive touch panel 30' in the finger operation mode according to the present invention.

As shown in FIG. 5A and FIG. 5B, a resistor R' is connected between the first electrode 321' on the first conductive layer 32' and the control module 21. The first electrode 321' and the second electrode 322' are electrically coupled with the power source V or the ground G respectively. When the user uses a finger to operate the resistive touch panel 30', the resistance of the equivalent resistor between the first electrode 321' and the second electrode 322' is smaller than that of the equivalent resistor in the touch pen operation mode. As shown in FIG. 5A, when the first conductive layer 32' contacts the second conductive layer 31' and the contact area of the first conductive layer 32' is very small, the measured voltage value across the resistor R' is smaller than the default value. Accordingly, it is determined that the touch pen touches the resistive touch panel 30'. In FIG. 5B, when the contact area of the first conductive layer 32' is large, the measured voltage value across the resistor R' is larger than the default value. Accordingly, it is determined that a finger or something having a large contact area touches the resistive touch panel 30'. On the hand, the touch mode can be determined by electrically coupling the resistor R' with the second electrode 322', the third electrode 323', or the fourth electrode 324' to obtain the voltage value across the resistor R'; however, other methods can be used for determining the voltage value across the resistor R'. The method of determining the touch mode for the five-wire resistive touch panel 30' is the same as that for the four-wire resistive touch panel 30; therefore, it will not be described further.

As described above, it is viable to use the resistive touch panel 30' to determine whether it is in the touch pen operation mode or the finger operation mode.

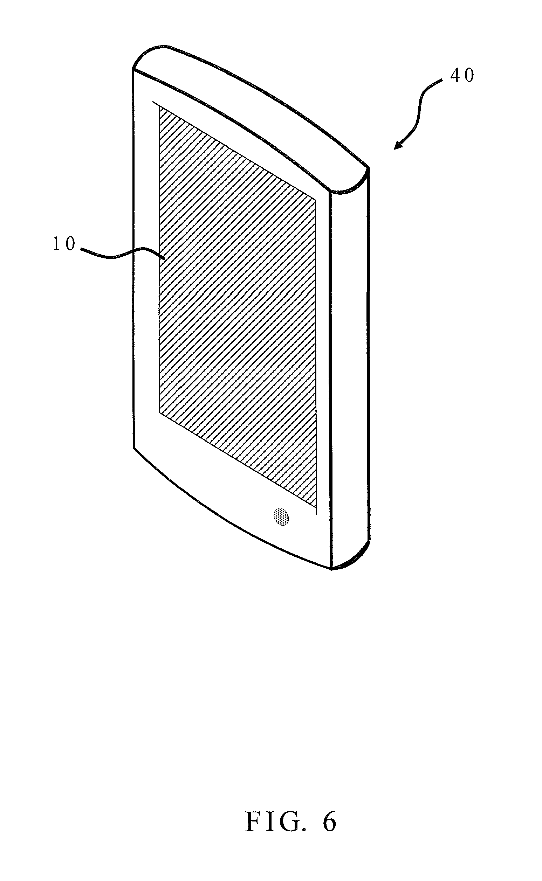

Finally, please refer to FIG. 6. FIG. 6 is an illustration of an electronic device comprising the touch display device according to the present invention.

The touch display device 10 according to the present invention can be installed on the electronic device 40 for users to operate the electronic device 40. The electronic device 40 can be, but is not limited to, a tablet PC, a cellular phone, or a personal data assistant. When a user touches the touch screen device 10 with a touch pen or a finger, the touch display device 10 can switch the touch mode to the touch pen operation mode or the finger operation mode to achieve different operation effects. For example, the touch screen device 10 can be implemented to draw thinner lines in the touch pen operation mode and draw thicker lines in the finger operation mode. The electronic device 40 can provide more control choices for the user.
It is noted that the abovementioned embodiments are only for illustration, and it is intended that the present invention cover modifications and variations of this invention provided they fall within the scope of the following claims and their equivalents. Therefore, it will be apparent to those skilled in the art that various modifications and variations can be made to the structure of the present invention without departing from the scope or spirit of the invention.

## Claims

1. A touch device capable of being operated under a touch pen operation mode or a finger operation mode comprising:
a resistive touch panel, comprising:
a first conductive layer; and
a second conductive layer being capable of contacting the first conductive layer when an input object is pressed;
a control module electrically coupled with the first conductive layer and the second conductive layer;
a resistor electrically coupled between the control module and the first conductive layer; and
a measuring unit measuring a voltage value across the resistor;
wherein when the first conductive layer is in contact with the second conductive layer, the measuring unit outputs a measured voltage value, and the touch pen operation mode is activated if the measured voltage value is smaller than a default value.

2. The touch device as claimed in Claim 1, wherein the first conductive layer comprises a first electrode and a second electrode; the control module is electrically coupled with the first electrode and the second electrode.

3. The touch device as claimed in Claim 2, wherein the first electrode is electrically coupled with a power source and the second electrode is electrically coupled with a ground.

4. The touch device as claimed in Claim 2, wherein the resistor is electrically coupled with one of the first electrode and the second electrode.

5. The touch device as claimed in Claim 2, wherein the second conductive layer comprises a third electrode and a fourth electrode.

6. The touch device as claimed in Claim 5, wherein the first electrode and the second electrode are used for measuring an X-axis coordinate value of the resistive touch panel, and the third electrode and the fourth electrode are used for measuring a Y-axis coordinate value of the resistive touch panel.

7. The touch device as claimed in Claim 1, wherein the finger operation mode is activated when the measured voltage value is larger than the default value.

8. The touch device as claimed in Claim 1, wherein the touch device is a touch display device.

9. The touch device as claimed in Claim 1, wherein the first conductive layer comprises a first electrode, a second electrode, a third electrode, and a fourth electrode.

10. The touch device as claimed in Claim 9, wherein the first electrode is electrically coupled with a power source, and the second electrode electrically is coupled with a ground.

11. The touch device as claimed in Claim 9, wherein the control module is electrically coupled with the first electrode, the second electrode, the third electrode and the fourth electrode, and the resistor is electrically coupled with one of the first electrode, the second electrode, the third electrode, and the fourth electrode.

12. The touch device as claimed in Claim 9, wherein the first electrode and the second electrode are used for measuring an X-axis coordinate value of the resistive touch panel, and the third electrode and the fourth electrode are used for measuring a Y-axis coordinate value of the resistive touch panel.

13. A method of determining a touch mode for a resistive touch panel that can be operated in a touch pen operation mode or a finger operation mode, the resistive touch panel comprising a first conductive layer and a second conductive layer, wherein the first conductive layer is electrically coupled with a resistor, the method comprising:
when the first conductive layer contacts the second conductive layer, measuring a voltage across the resistor to obtain a measured voltage;
determining whether the measured voltage is smaller than a default value; and
activating the touch pen operation mode if the measured voltage is smaller than the default value.

14. The method as claimed in Claim 13 further comprising the step of:
activating the finger operation mode if the measured voltage is larger than the default value.

15. The method as claimed in Claim 13, wherein the first conductive layer comprises a first electrode and a second electrode, and the second conductive layer comprises a third electrode and a fourth electrode; th e first electrode i s electrically coupled with a power source, and the second electrode is electrically coupled with a ground,
wherein the first electrode and the second electrode have a voltage difference in order to form a uniform electric field.

16. The method as claimed in Claim 15, wherein the resistor is electrically coupled with one of the first electrode, the second electrode, the third electrode, and the fourth electrode.

17. The method as claimed in Claim 13, wherein the first conductive layer comprises a first electrode and a second electrode, a third electrode and a fourth electrode; the first electrode is electrically coupled with a power source, and the second electrode is electrically coupled with a ground, wherein the first electrode and the second electrode have a voltage difference in order to form a uniform electric field.

18. The method as claimed in Claim 17, wherein the resistor is electrically coupled with one of the first electrode, the second electrode, the third electrode, and the fourth electrode.
